# DEMANDE DE BREVET EUROPEEN

(11) **EP 1 679 451 A1**
(43) Date de publication de la demande: **12.07.2006**
(21) Numéro de dépôt: 06356002.3
(22) Date de dépôt: 05.01.2006
(51) Int. Cl.: F16D 51/16, F16D 65/14, F16D 59/02, F16D 55/02, B65H 75/30

(54) **Frein, mécanisme de manoeuvre incorporant un tel frein et installation de fermeture, de protection solaire ou de projection d'images comprenant un tel mécanisme**

(30) Priorité: 07.01.2005 FR 0500173; 21.06.2005 FR 0506276
(71) Demandeur: Somfy SAS, 74300 Cluses (FR)
(72) Inventeur: Serasset, Alain, 74700 Sallaches (FR); Benoin, Jean-Charles, 74300 Cluses (FR); Chatellard, David, 74170 Saint Gervais les Bains (FR)
(74) Mandataire: Myon, Gérard Jean-Pierre

(57) **Abrégé**

Ce frein comprend un corps (102) destiné à être solidarisé en rotation avec un arbre mené et au moins un organe de freinage (110) monté sur le corps (102) et mobile par rapport à celui-ci entre une première position de freinage, dans laquelle cet organe (110) est en appui contre une structure fixe (100), et une seconde position dans laquelle cet organe (110) est dégagé de la structure fixe (100). Il comprend également un moyen (113) de rappel de l'organe (110) vers sa première position et un moyen de commande du déplacement de cet organe (110) de sa première vers sa seconde position. Ce moyen de commande comprend une liaison (L) à deux leviers (106, 119) articulés entre eux, dont un premier levier (106) destiné à être solidarisé en rotation avec l'arbre menant est monté pivotant par rapport au corps (102) et dont le second levier (119) est articulé sur l'organe de freinage (110). Des butées (107a, 107b) sont prévues pour recevoir en appui l'un (106) des leviers de la liaison articulée et limiter ainsi le déplacement angulaire relatif entre les arbres menant et mené.

## Description

L'invention a trait à un frein destiné à être intercalé entre un arbre menant et un arbre mené et, plus particulièrement, utilisable au sein d'un mécanisme de manoeuvre d'un écran de fermeture, de protection solaire, de projection ou analogue. L'invention a également trait à un mécanisme de manoeuvre de ce type équipé d'un tel frein ainsi qu'à une installation de fermeture, de protection solaire ou de projection d'images comprenant, entre autres, un tel mécanisme.

Par installation de fermeture, on entend, les portes, portails, volets, grilles et matériels équivalents. Par écran de projection, on entend des écrans sur lesquels peuvent être projetées des images animées ou fixes, notamment des images de films cinématographiques.

Dans les mécanismes de manoeuvre de volet roulant, il est connu, par exemple de IT-BO-92U000009, d'utiliser un frein dans lequel un plateau est déplacé axialement lorsqu'un moteur électrique est activé pour l'enroulement d'un volet, ce qui permet de supprimer l'action de freinage du frein. Une structure commandée manuellement, telle que celle divulguée dans FR-A-2 194 265, peut également être utilisée comme frein dans ce genre de mécanisme.

Un frein de ce type permet de simplifier la conception des dispositifs de manoeuvre puisqu'il cesse automatiquement son action de freinage lorsqu'un couple est appliqué sur son arbre menant. Il présente cependant l'inconvénient d'être gros consommateur d'énergie car, pour pouvoir être « ouvert », ce frein exige que le dispositif de manoeuvre, qu'il soit électrique ou manuel, développe une énergie en rapport avec la capacité du frein. Or, un tel frein doit être dimensionné pour avoir la capacité de freiner efficacement la charge susceptible d'être manoeuvrée. Le rendement mécanique de ce genre de frein étant par ailleurs médiocre, on constate que le dispositif de manoeuvre doit fournir en permanence, lorsque le frein doit être ouvert, une énergie sensiblement égale à l'énergie de pleine charge, que la charge soit effectivement pleine ou seulement partielle. Ceci est pénalisant dans le cas où la charge à commander a un poids variable en fonction de sa position, ce qui est le cas des écrans enroulables dont la charge correspondante est maximale uniquement lorsque l'écran est complètement déroulé. En outre, dans les mécanismes de manoeuvre d'écran, lors du mouvement de descente d'un écran, le poids de celui-ci contribue normalement à fournir une partie de l'énergie de manoeuvre de sorte que, en l'absence d'un frein tel que mentionné ci-dessus, le déplacement de l'écran pourrait être obtenu pratiquement sans énergie supplémentaire. Ceci est également le cas dans les installations où le poids de l'écran est compensé par un dispositif à ressorts. Or, lorsqu'un frein tel que mentionné ci-dessus est utilisé, il doit freiner efficacement l'écran dans toutes les configurations pour éviter des déplacements non autorisés qui seraient tentés par une action directe sur l'écran.

Les freins connus des documents ci-dessus induisent donc une surconsommation d'énergie électrique lorsque le dispositif de manoeuvre est électrique, principalement lorsqu'il s'agit d'un moteur à courant continu dans lequel le courant consommé est directement lié à la charge. Lorsque le dispositif de manoeuvre est manuel, l'utilisation d'un tel frein induit un désagrément pour l'utilisateur. Dans tous les cas, le dispositif de manoeuvre travaillant toujours sous charge maximum, il doit être dimensionné en conséquence, ce qui a une incidence sur sa taille et son prix de revient. Si le dispositif de manoeuvre est électrique, son alimentation doit être sur-dimensionnée.

Une solution à une partie des inconvénients ci-dessus est décrite dans US-A-3,068,975 où des billes ou galets sont disposés entre les éléments frottants d'un frein. Ainsi, la valeur de la force de décollage ou d'ouverture du frein est diminuée. Cependant, un tel frein est difficile à réaliser car les rampes recevant en appui les billes ou galets doivent être usinées avec une grande précision et la mise en place des billes ou galets est très délicate sans un outillage spécifique, complexe et coûteux.

Selon une autre approche décrite dans US-A-1,824,150, on peut commander, au moyen d'une liaison articulée, le déplacement de patins de freinage d'un arbre moteur par rapport à un boîtier fixe. Une telle approche n'est pas transposable à un frein intercalé entre un arbre menant et un arbre mené, en particulier car le déplacement angulaire de l'arbre moteur par rapport au boîtier n'est pas limité de façon précise.

C'est à ces inconvénients qu'entend plus particulièrement remédier l'invention en proposant un nouveau frein à intercaler entre un arbre menant et un arbre mené, qui peut être manoeuvré de façon plus aisée que les matériels connus, sans nécessiter une consommation d'énergie disproportionnée par rapport à la charge à mettre en mouvement lorsqu'il est ouvert et grâce auquel la position angulaire relative des arbres menant et mené peut être efficacement contrôlée.

A cet effet, l'invention concerne un frein destiné à être intercalé entre un arbre menant et un arbre mené solidaire en rotation d'une charge à freiner, ce frein comprenant un corps destiné à être solidarisé en rotation avec l'arbre mené, caractérisé en ce qu'il comprend :
- au moins un organe de freinage monté sur le corps précité et mobile par rapport à celui-ci entre une première position, dite de freinage, dans laquelle cet organe est en appui contre une structure fixe, et une seconde position dans laquelle cet organe est dégagé de cette structure fixe ;
- au moins un moyen de rappel de cet organe vers sa première position ;
- un moyen de commande du déplacement de cet organe, de sa première position vers sa seconde position, ce moyen de commande comprenant au moins une liaison à deux leviers articulés entre eux, dont un premier levier destiné à être solidarisé en rotation avec l'arbre menant est monté pivotant par rapport au corps et dont le second levier est articulé sur l'organe de freinage et
- au moins une butée de limitation du déplacement angulaire relatif entre l'arbre menant et l'arbre mené, cette butée étant apte à recevoir en appui l'un des leviers de la liaison articulée lorsque l'organe de freinage est dans sa seconde position précitée. Grâce à l'invention, la liaison à deux leviers articulés permet de contrôler efficacement le déplacement de l'organe de freinage, à l'encontre de l'action du moyen de rappel, et ce, grâce à un effort exercé par l'arbre menant. La butée permet de contrôler précisément la position angulaire relative des arbres menant et mené lorsque le frein est désactivé, ce qui permet de commander avec précision la rotation de l'arbre mené.

D'autres aspects avantageux mais non obligatoires de l'invention, ressortent des revendications 2 à 26.

L'invention concerne également un mécanisme de manoeuvre d'un écran de fermeture, de protection solaire, de projection ou analogue qui comprend un organe d'entraînement, un organe d'enroulement de l'écran et un frein tel que décrit ci-dessus intercalé entre l'organe d'entraînement et l'organe d'enroulement.

Un tel mécanisme de manoeuvre est plus aisé à manoeuvrer que les mécanismes de l'état de la technique qui comprennent un frein de type « actionné par la manoeuvre », tout en étant relativement facile et économique à fabriquer.

L'invention concerne enfin une installation de fermeture, de protection solaire, de projection d'images ou une installation équivalente qui comprend un mécanisme de manoeuvre tel que mentionné ci-dessus.

L'invention sera mieux comprise et d'autres avantages de celle-ci apparaîtront plus clairement à la lumière de la description qui va suivre de dix modes de réalisation d'un frein conforme à son principe, d'un mécanisme et d'une installation également conforme à son principe, donnée uniquement à titre d'exemple et faite en référence aux dessins annexés dans lesquels :
- la figure 1 est une coupe partielle de principe d'une installation conforme à l'invention incorporant un mécanisme également conforme à l'invention dans lequel un frein conforme à l'invention est intercalé entre un moteur électrique et un tube d'enroulement d'un tablier d'obturation d'une ouverture, alors que le moteur n'est pas activé ;
- la figure 2 est une coupe partielle du seul frein selon la ligne II-II à la figure 1 ;
- la figure 3 est une coupe analogue à la figure 2 lorsque le moteur est activé dans un premier sens de rotation ;
- la figure 4 est une coupe analogue à la figure 2 lorsque le moteur est activé dans l'autre sens de rotation ;
- la figure 5 est une vue en perspective partiellement éclatée du frein dont le couvercle a été omis ;
- la figure 6 est une vue en perspective selon un autre angle de certains éléments constitutifs du frein ;
- la figure 7 est une vue analogue à la figure 3 pour un frein conforme à un second mode de réalisation de l'invention ;
- la figure 8 est une vue analogue à la figure 2 pour un frein conforme à un troisième mode de réalisation de l'invention ;
- la figure 8A est une coupe partielle selon la ligne A-A à la figure 8 ;
- la figure 9 est une vue analogue à la figure 2 pour un frein conforme à un quatrième mode de réalisation de l'invention ;
- la figure 9A est une coupe partielle selon la ligne A-A à la figure 9 ;
- la figure 10 est une vue du détail X à la figure 9 pour un frein conforme à un cinquième mode de réalisation de l'invention ;
- la figure 11 est une vue analogue à la figure 10 pour un frein conforme à un sixième mode de réalisation de l'invention ;
- la figure 12 est une vue analogue à la figure 2 pour un frein conforme à un septième mode de réalisation de l'invention ;
- la figure 13 est une coupe de principe d'un frein conforme à un huitième mode de réalisation de l'invention en configuration de freinage ;
- la figure 14 est une coupe selon la ligne XIV-XIV à la figure 13 du frein en configuration de libération de l'effort de freinage ;
- la figure 15 est une vue analogue au médaillon XV à la figure 1 pour un mécanisme incorporant un frein conforme à un neuvième mode de réalisation de l'invention ;
- la figure 16 est une coupe analogue à la figure 1 d'une installation conforme à l'invention incorporant un frein conforme à un dixième mode de réalisation de l'invention ;
- la figure 17 est une vue à plus grande échelle du détail XVII à la figure 16 lorsque le moteur est activé ; et
- la figure 18 est une vue en perspective de certains éléments du frein représenté sur les figures 16 et 17.

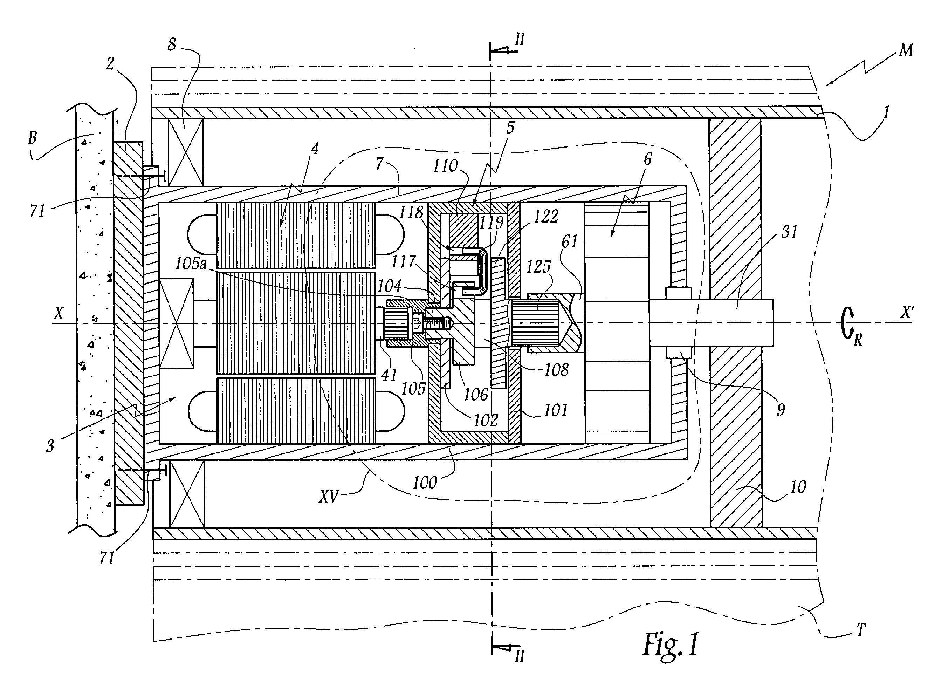

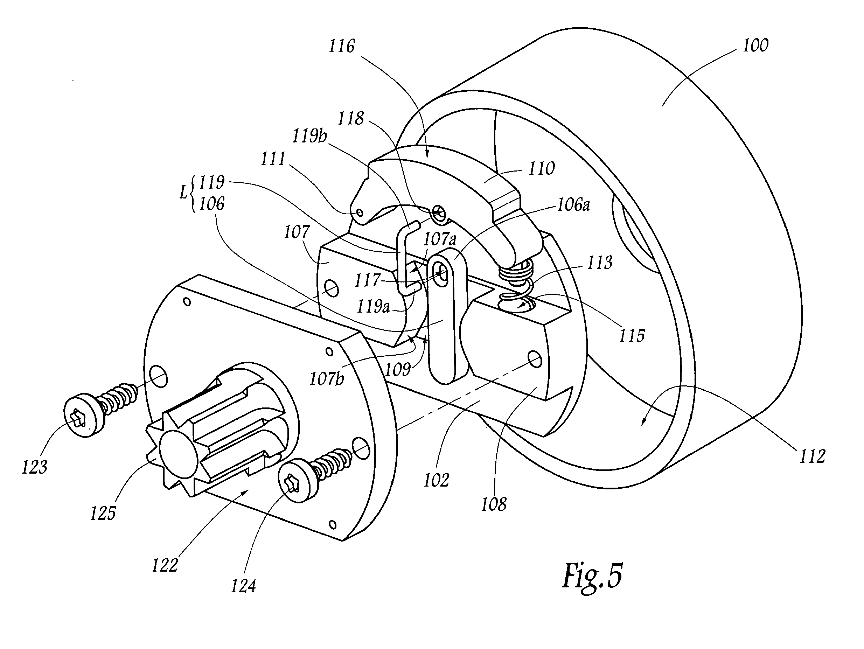

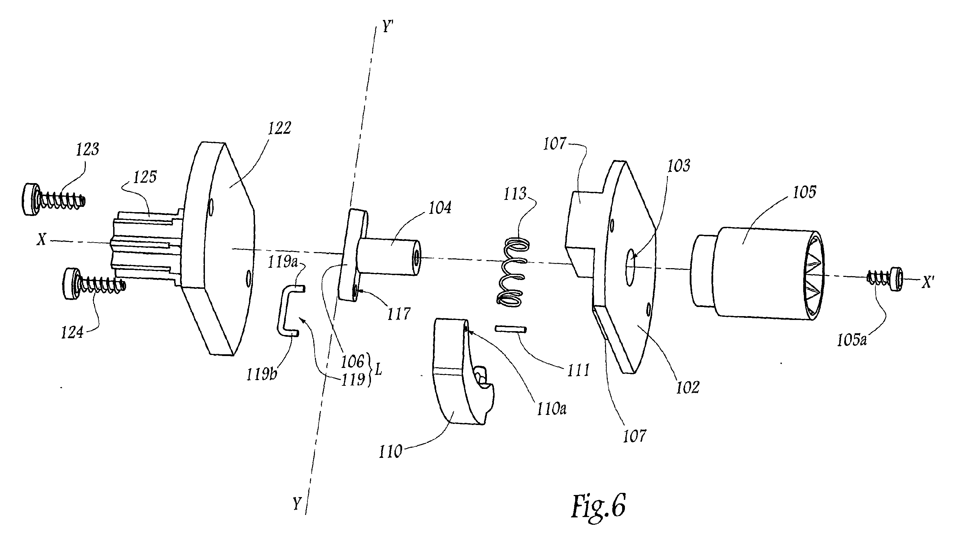

L'invention représentée partiellement aux figures 1 à 6 comprend un mécanisme M permettant d'enrouler plus ou moins, autour d'un axe géométrique sensiblement horizontal X-X', un tablier T représenté en traits mixtes. Ceci permet d'obturer plus ou moins une ouverture ménagée dans la maçonnerie d'un bâtiment B.

Cette installation est une installation de fermeture. Il pourrait également s'agir d'une installation de protection solaire, d'une installation de déploiement d'un écran de projection d'images fixes ou animées ou d'une installation analogue.

Le mécanisme M comprend un tube 1 dont l'axe géométrique central est confondu avec l'axe X-X' et qui est supporté, par rapport à la structure du bâtiment B, au moyen d'une console 2. Un ensemble d'entraînement 3 est prévu pour mettre en rotation le tube 1 autour de l'axe X-X', comme représenté par la double flèche R. Cet ensemble comprend un moteur électrique 4, un frein 5 et un réducteur 6 logés dans un boîtier tubulaire 7 fixé sur la console 2 par tout moyen approprié, par exemple par des vis 71. Le réducteur 6 est un matériel connu en soi. Il est représenté en vue extérieure à la figure 1.

Un palier 8 est disposé autour du boîtier 7 et permet de supporter l'extrémité du tube 1 la plus proche de la console 2.

L'arbre de sortie 31 de l'ensemble 3 est supporté par un palier 9 et attaque une couronne 10 d'entraînement du tube 1 en rotation autour de l'axe X-X'. Ainsi, en alimentant le moteur 4 en courant électrique au moyen de câbles conducteurs non représentés, il est possible de faire tourner la couronne 10, dans un sens ou dans l'autre, autour de l'axe X-X' et, en fonction du sens du courant, d'enrouler plus ou moins le tablier T.

On note 41 l'arbre de sortie du moteur 4 et 61 l'arbre d'entrée du réducteur 6. Pour le frein 5, l'arbre 41 est un arbre menant, alors que l'arbre 61 est un arbre mené. Ces arbres ont leurs axes géométriques principaux confondus avec l'axe X-X'.

Le frein 5 comprend un boîtier 100 de forme extérieure circulaire adaptée à la forme intérieure du boîtier 7 et destiné à être immobilisé dans le boîtier 7 par tout moyen approprié, par exemple par vissage, goupillage ou collage. Un couvercle 101 est associé au boîtier 100 et permet d'en isoler le volume intérieur par rapport à l'environnement du frein 5.

A l'intérieur du boîtier 100 est disposé un corps 102 destiné à être entraîné en rotation autour de l'axe X-X' et qui est pourvu d'un orifice central 103 dans lequel est reçu, avec possibilité de rotation, un pion 104 prévu pour être solidarisé avec une douille 105 cannelée intérieurement et destinée à recevoir l'extrémité cannelée de l'arbre 41. Une vis 105a permet la solidarisation des éléments 104 et 105. Les éléments 104 et 105 pourraient être monoblocs. Le pion 104 est monobloc avec une traverse 106 qui s'étend globalement selon une direction Y-Y' radiale par rapport à l'axe X-X'.

En variante, l'élément 104 pourrait être remplacé par l'extrémité de l'arbre 41 qui viendrait s'engager dans un alésage pratiqué directement dans la traverse 106.

Le corps 102 est pourvu de deux parties en saillie 107 et 108 disposées de part et d'autre de l'orifice 103 et définissant entre elles un volume 109 de réception de la traverse 106 lorsque le pion 104 est en place dans l'orifice 103.

Un sabot de freinage 110 est monté et articulé sur le corps 102 autour d'un axe X₁-X'₁ parallèle à l'axe X-X' et matérialisé par un pion 111 s'étendant dans la direction de l'axe X₁-X'₁ et reçu dans un alésage 110a ménagé dans le sabot 110, avec possibilité de pivotement. Le sabot 110 est solidaire du corps 102 en rotation autour de l'axe X-X'.

Le sabot 110 est représenté monobloc sur les figures. Il peut également s'agir d'une structure bipartite comprenant une armature rigide et une garniture formant pièce d'usure.

Le sabot 110 est destiné à être en appui contre la surface radiale interne 112 du boîtier 100. Pour ce faire, un ressort 113 est intercalé entre l'extrémité 114 du sabot 110 opposé au pion 111 et le fond d'un logement 115 prévu dans la partie 108.

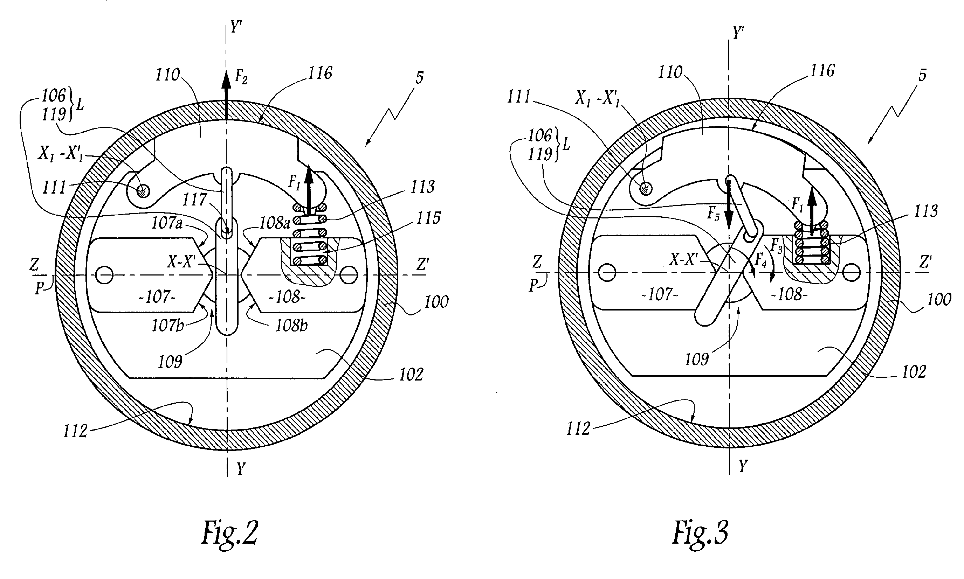

Le ressort 113 exerce sur l'extrémité 114 du sabot 110 un effort F₁ qui tend à plaquer la surface extérieure 116 du sabot 110 contre la surface 112. L'effet de l'effort F₁ sur le sabot 110 est ainsi un effort F₂ d'appui du sabot 110 contre la surface 112. Le matériau constitutif du sabot 110, ou de la garniture de ce sabot lorsque celui-ci est bipartite, est choisi pour que son coefficient de frottement avec la surface 112 soit suffisant pour immobiliser en rotation le corps 102 par rapport au boîtier 100 lorsque les surfaces 112 et 116 sont en appui l'une contre l'autre, comme représenté à la figure 2.

La traverse 106 est pourvue d'une lumière oblongue 117 ménagée au voisinage de son extrémité 106a la plus proche du sabot 110. La plus grande dimension de la lumière 117 est parallèle à la plus grande dimension de la traverse 106. Le sabot 110 est pourvu d'un alésage 118 ménagé dans une zone intermédiaire entre son extrémité 114 et la partie dans laquelle est reçu le pion 111.

Une agrafe 119 en forme de U à fond plat est engagée par ses deux branches 119a et 119b respectivement dans la lumière 117 et l'alésage 118, ce qui permet de créer une liaison cinématique entre le pion 104 et le sabot 110, à travers les éléments 106 et 119. La lumière 117 et l'alésage 118 constituent des logements de réception des branches 119a et 119b.

Les dimensions respectives des parties 117, 118 et 119 sont telles que les branches 119a et 119b peuvent pivoter à l'intérieur des logements 117 et 118.

Les parties 106 et 119 constituent ainsi une liaison articulée L entre le pion 104 et le sabot 110, cette liaison comprenant un premier levier constitué par la traverse 106 et un second levier constitué par l'agrafe 119.

Une plaque 122 est fixée par deux vis 123 et 124 sur les parties 107 et 108. La plaque 122 porte un arbre cannelé 125 qui constitue l'arbre de sortie du frein 5 sur lequel est emmanché l'arbre 61 qui est creux et cannelé intérieurement.

En configuration montée du mécanisme M, le pion 104, la douille 105 et l'arbre 125 sont alignés sur l'axe X-X'.

On comprend que le corps 102 est solidaire en rotation de la plaque 122, de sorte que le contrôle du mouvement de rotation du corps 102 autour de l'axe X-X' permet de contrôler le mouvement de rotation de l'arbre 125 et, par là-même, celui des éléments 6, 10 et 1 du mécanisme M.

Le fonctionnement du frein 5 est le suivant :

Par défaut, c'est-à-dire lorsque le moteur 4 n'est pas activé, le sabot 110 subit principalement l'action du ressort 113, ce qui a pour effet de générer l'effort F₂ qui induit une immobilisation par friction du sabot 110 à l'intérieur du boîtier 100 et, par là même, du corps 102. Un jeu suffisant est prévu au niveau des interfaces entre les éléments 110 et 111, 111 et 102, 119 et 110 et/ou 119 et 106 pour que l'effort F₁ induise un appui effectif du sabot 110 contre le boîtier 100. En particulier, le caractère oblong de la lumière 117 permet un déplacement relatif des leviers 106 et 119 l'un par rapport à l'autre, ce qui autorise l'effort d'appui F₂. L'alésage 118 pourrait également être remplacé par une lumière qui serait prévue oblongue, en complément ou à la place de la lumière 117.

Dans cette configuration, le frein empêche la mise en rotation de l'arbre mené 61.

Lorsque le moteur 4 est activé, de telle sorte que son arbre 41 tourne dans le sens des aiguilles d'une montre à la figure 3, comme représenté par la flèche F₃, le couple de sortie du moteur 4 met en rotation, à travers l'arbre 41 et la douille 105, le pion 104 qui entraîne lui-même le levier-traverse 106 dans le sens de la flèche F₄ à la figure 3. Compte tenu de l'articulation L réalisée par les éléments 106 et 119, ceci induit sur le sabot 110 un effort F₅ qui tend à écarter la surface 116 de la surface 112 à l'encontre de l'effort F₁.

L'effort de freinage dû au frottement des surfaces 116 et 112 l'une contre l'autre est ainsi supprimé et le corps 102 peut être entraîné en rotation. En d'autres termes, le frein 5 ne s'oppose plus à la transmission du couple entre l'arbre menant 41 et l'arbre mené 61.

Les parties 107 et 108 sont configurées en pointe de part et d'autre du volume 109. Plus précisément, la partie 107 définit deux surfaces 107a et 107b symétriques par rapport à un plan P contenant l'axe X-X' et dont la trace dans le plan de la figure 2 est un axe Z-Z' perpendiculaire à l'axe X-X' et à la direction Y-Y'. La partie 108 définit également deux surfaces 108a et 108b symétriques par rapport au plan P. Les surfaces 107a et 108a sont divergentes en s'éloignant de l'axe X-X', de même que les surfaces 107b et 108b.

Dans la configuration de la figure 3, les surfaces 108a et 107b reçoivent en appui la traverse 106 au terme de son mouvement selon la flèche F₄.

Ainsi, lorsque les leviers 106 et 119 ont décalé radialement vers l'axe X-X' le sabot 110, le levier-traverse 106 vient en appui contre les surfaces 108a et 107b qui constituent des butées au mouvement de rotation du pion 104 par rapport au corps 102, le couple de sortie du moteur 4 étant alors transmis par l'appui du levier-traverse 106 contre les parties en saillie 107 et 108.

On relève ici que le caractère symétrique du levier-traverse 106 par rapport au pion 104 permet un appui simultané de celui-ci sur les surfaces 107b et 108a, ce qui facilite la transmission du couple comme indiqué ci-dessus. Cependant, le levier-traverse 106 pourrait s'étendre seulement en direction du sabot 110 à partir du pion 104, auquel cas il ne s'appuierait que sur la surface 108a dans la configuration de la figure 3. En outre, l'utilisation simultanée des surfaces 107b et 108a n'est pas indispensable dans la mesure où l'on peut également compter sur la mise en butée du ressort 113 spire contre spire au terme du mouvement du sabot 110 sous l'effort F₅, le couple de mise en rotation de l'arbre mené 61 transitant alors par les éléments 106, 119, 110, 113 et 108 ou à travers toute autre butée solidaire du corps 102 apte à limiter le mouvement du sabot 110. Bien que moins efficace en terme de transmission du couple, ces variantes restent envisageables pour des mécanismes de manoeuvre susceptibles de transmettre des couples relativement faibles.

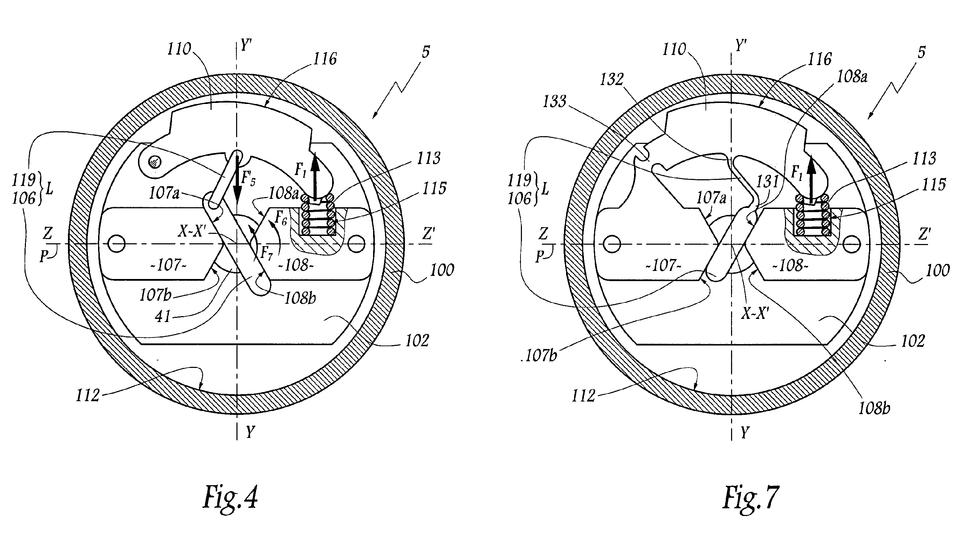

Comme représenté à la figure 4 par la flèche F₆, si l'arbre 41 est entraîné dans le sens anti-horaire, le levier-traverse 106 est déplacé dans le même sens, comme représenté par la flèche F₇, ce qui a pour effet d'exercer sur le sabot 110 un effort F'₅ d'éloignement de la surface 116 par rapport à la surface 112. Comme précédemment, le corps 102 peut donc être mis en rotation autour de l'axe X-X', cette fois dans le sens de la flèche F₆.

Dans cette configuration, la traverse 106 vient en appui contre les surfaces 107a et 108b qui constituent également des butées à travers lesquelles le couple généré par le moteur 4 est transmis à l'arbre mené 61.

Ainsi, les butées 107a, 107b, 108a et 108b permettent, lorsque un couple moteur doit être transmis à travers le frein 5 ouvert, de limiter le déplacement angulaire relatif autour de l'axe X-X' entre les parties 104 et 102, c'est-à-dire entre les arbres 41 et 61.

Grâce aux butées 107a et 108b ou 107b et 108a, selon le sens de rotation de l'arbre 41, lorsque le frein 5 est actionné pour décoller le sabot 110 de la surface 112, la position angulaire relative des arbres 41 et 61 est bien déterminée du fait de l'appui du levier-traverse 106 sur ces butées. Ceci permet de contrôler efficacement la rotation de l'arbre mené 61 et du tube 1.

Le fait que le sabot 110 est articulé sur le corps 102 permet d'améliorer le rendement d'ouverture du frein et d'obtenir un effet dissymétrique de freinage, ce qui est particulièrement intéressant pour des installations de manoeuvre dont on connaît à l'avance la configuration en ce qui concerne le sens de déploiement de l'écran pour lequel un effort de freinage important est requis, contrairement au sens inverse.

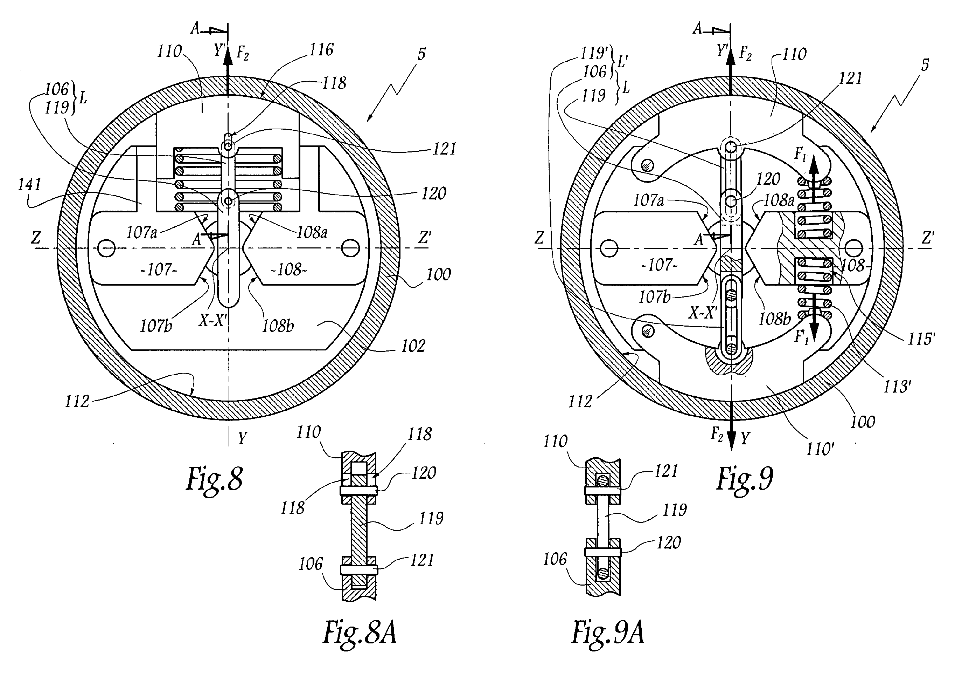

Dans les deuxième à neuvième modes de réalisation de l'invention représentés aux figures 7 à 15, les éléments analogues à ceux du premier mode de réalisation portent des références identiques.

Le deuxième mode de réalisation diffère du précédent en ce que les éléments 106, 107, 110 et 119 du frein 5 sont réalisés par une pièce monobloc en matière plastique moulée dans laquelle sont prévues des zones de moindre résistance 131, 132 et 133 correspondant à des zones d'articulation entre les parties 106 et 119, d'une part, 119 et 110, d'autre part, et 119 et 107, de troisième part.

Par rapport au premier mode de réalisation, ce second mode de réalisation permet de diminuer les coûts de fabrication par réduction du nombre de pièce et diminution du temps de montage.

Comme précédemment, les parties 107 et 108 forment des butées 107a, 107b, 108a et 108b au pivotement du levier 106 et limitent le déplacement angulaire entre les arbres menant et mené.

Dans le troisième mode de la réalisation de l'invention représenté à la figure 8, le sabot 110 du frein 5 est monté coulissant, selon une direction Y-Y' radiale par rapport à l'axe X-X', entre deux nervures 141 et 142 respectivement monobloc avec les parties 107 et 108 formant butée. Un ressort hélicoïdal 113 est en appui à la fois sur les parties 107 et 108 et sur une face du sabot 110 opposée à sa surface 116 destinée à venir en appui contre la surface interne 112 du boîtier 100. Le sabot 110 est ici un piston guidé en translation par les nervures 141 et 142, les caractéristiques de freinage et de libération étant ici les mêmes, quel que soit le sens de rotation du couple exercé par l'arbre menant 41.

Comme précédemment, des leviers 106 et 119, respectivement pivotants par rapport au corps 102 et articulés sur le sabot 110, sont articulés entre eux au niveau d'une lumière 117 et forment une liaison articulée L permettant d'exercer sur le sabot-piston 110 un effort de traction centripète.

Le levier 119 est ici constitué par une biellette dont les extrémités sont prises en chape respectivement au niveau du levier 106 et du sabot 110. Deux pions 120 et 121 traversent ces extrémités et sont articulés sur les éléments 106 et 110. Les perçages 118 recevant le pion 121 dans le sabot 110 sont oblongs avec leur plus grand axe parallèle au plan de la coupe A-A, ce qui assure un jeu suffisant pour l'appui F₂ du sabot 110 contre la surface 112 dans la configuration de la figure 8.

Dans le troisième mode de réalisation également, les parties 107 et 108 forment des butées 107a, 107b, 108a et 108b qui ont la même fonction que dans les deux premiers modes de réalisation.

Dans le quatrième mode de réalisation de l'invention représenté à la figure 9, le corps 102 du frein 5 est équipé de deux sabots 110 et 110' montés de façon symétrique l'un de l'autre par rapport au plan P contenant les axes X-X' et Z-Z'. Dans ce mode de réalisation, la traverse 106 constitue un premier levier double associé à deux seconds leviers 119 et 119' formés chacun par une agrafe fermée et aplatie, alors que deux logements 115 et 115' sont prévus dans la partie 108 pour la réception de deux ressorts 113 et 113' chargeant chacun l'un des sabots 110 et 110' en direction de la surface interne 112 du boîtier 100 grâce à un effort élastique F₁, respectivement F'₁.

Les agrafes 119 et 119' sont prises en chape par le levier 106 et les sabots 110 et 110' en étant disposées autour de deux pions 120 et 121 montés respectivement sur le levier 106 et l'un des sabots 110 et 110'.

La forme de l'agrafe 119' est plus particulièrement visible en partie basse de la figure 9, par arrachement partiel.

On forme ainsi deux liaisons articulées L et L' similaires à celles des modes de réalisation précédent.

Comme le précédent, ce mode de réalisation permet un effort de freinage identique induit par l'effort F₂ dans chacun des sens de déplacement de la charge, c'est-à-dire ici du tablier T. Par rapport aux modes de réalisation précédents, la valeur de la charge susceptible d'être freinée est ici augmentée, alors que l'on bénéficie d'un bon rendement de fonctionnement en raison de l'articulation des sabots 110 et 110' sur le corps 102.

Des butées 107a, 107b, 108a et 108b sont formées par les parties 107 et 108 et ont la même fonction que celles des trois premiers modes de réalisation.

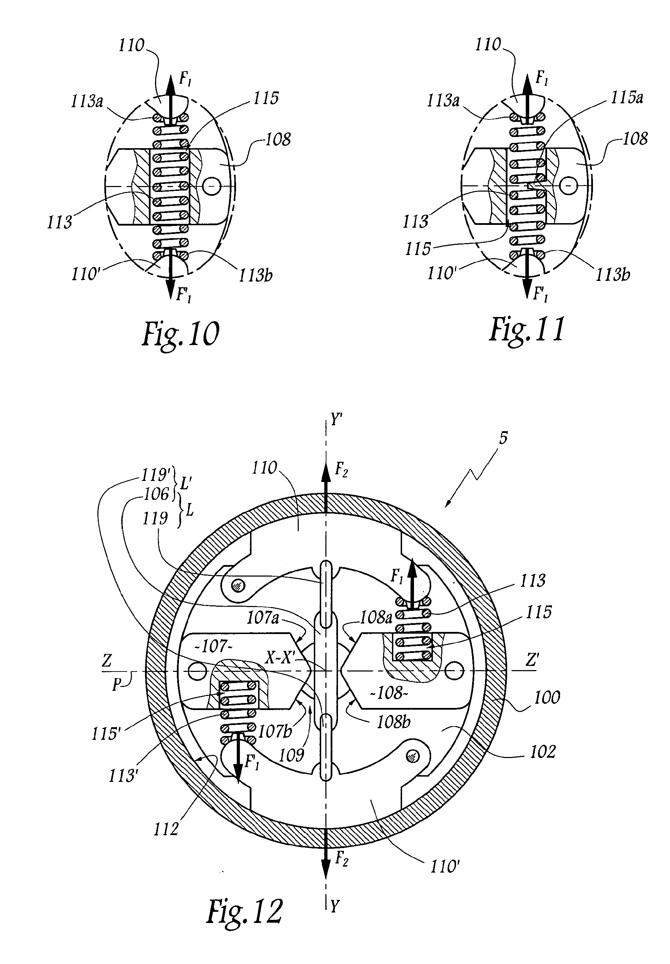

Dans le cinquième mode de réalisation de l'invention représenté à la figure 10, un seul ressort 113 est utilisé pour exercer un effort F₁ sur le sabot 110 du frein 5 et un effort équivalent F'₁ sur le sabot 110', les deux extrémités 113a et 113b de ce ressort 113 étant respectivement en appui contre le sabot 110 et le sabot 110'. Pour ce faire, le logement 115 prévu dans la partie 108 pour le ressort 113 est traversant.

Dans le sixième mode de réalisation de l'invention représenté à la figure 11, un unique ressort 113 est également utilisé et ses extrémités 113a et 113b sont en appui contre les sabots 110 et 110'. Une languette 115a s'étend dans le logement 115 qu'elle divise partiellement en deux. La languette 115a est engagée entre deux spires du ressort 113 et constitue un point fixe pour les parties de ce ressort situées respectivement au-dessus et au-dessous de cette languette dans la représentation de la figure 11. Le positionnement du ressort 113 par rapport à la languette 115a permet de répartir les efforts F₁ et F'₁ exercés par le ressort 113.

Dans le septième mode de réalisation de l'invention représenté à la figure 12, le corps 102 du frein 5 est également équipé de deux sabots 110 et 110' mais ceux-ci sont disposés symétriquement par rapport à l'axe X-X', un premier ressort 113 exerçant un effort F₁ sur le sabot 110 en étant en appui dans un logement 115 ménagé dans la partie 108, alors qu'un second ressort 113' exerce un effort F'₁ sur le sabot 110' en étant en appui dans un logement 115' ménagé dans la partie 107. L'effet de freinage obtenu par l'effort F₂ avec ce mode de réalisation est dissymétrique mais est sensiblement augmenté par rapport à celui du premier mode de réalisation.

Des butées 107a, 107b, 108a et 108b sont formées par les parties 107 et 108, avec la même fonction que celles des modes de réalisation précédents.

Comme dans le mode de réalisation de la figure 9, deux liaisons articulées L et L' sont obtenues au moyen des leviers 106, 119 et 119'.

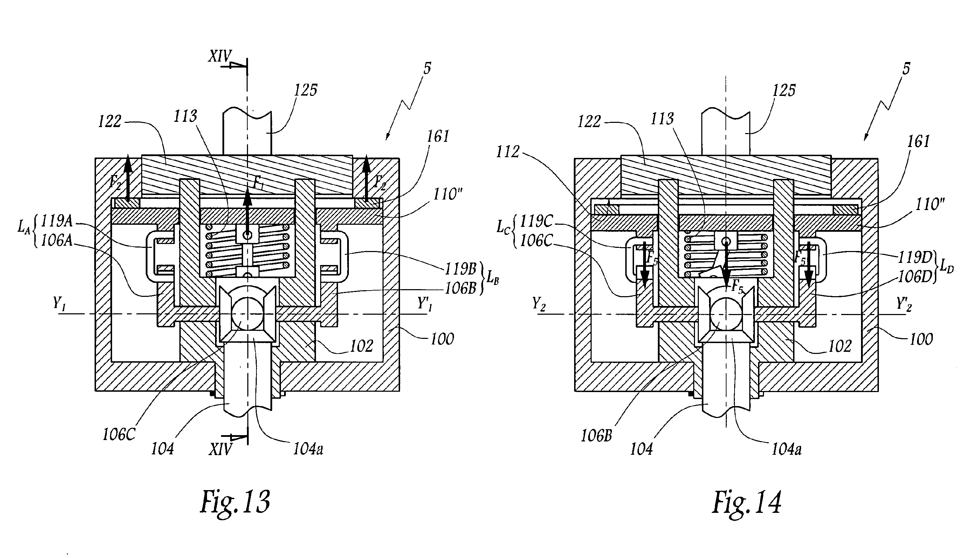

Dans le huitième mode de réalisation de l'invention représenté aux figures 13 et 14, le corps 102 du frein définit un logement central dans lequel débouche un arbre 104 pourvu d'une denture conique 104a et destiné à être solidarisé en rotation avec l'arbre menant. La denture conique 104a engrène avec les dentures coniques de quatre leviers coudés 106A, 106B, 106C et 106D montés rotatifs dans le corps 102 autour de deux axes Y₁-Y'₁ et Y₂-Y'₂ visibles respectivement aux figures 13 et 14 et perpendiculaires entre eux et à l'axe X-X' de l'arbre 104.

Un plateau 110'' est pourvu d'une garniture 161 destinée à venir en appui contre une partie fixe du boîtier 100 du frein 5 de ce mode de réalisation.

Le plateau 110'' est relié respectivement par quatre agrafes 119A, 119B, 119C et 119D aux quatre leviers coudés 106A à 106D.

Il est ainsi formé quatre liaisons articulées L_{A}, L_{B}, L_{C} et L_{D} formées chacune d'un levier coudé 106_{A} à 106_{D} et d'une agrafe 119_{A} à 119_{D}.

Un ressort 113 intercalé entre le corps 102 et le plateau 110" exerce sur celui-ci un effort F₁ qui tend à plaquer la garniture 161 contre une surface interne 112 du boîtier 100.

Par ailleurs, le corps 102 est solidaire d'une plaque 122 sur laquelle est monté un arbre 125 destiné à être raccordé à un arbre mené entraîné à travers le frein 5.

Par défaut, ce frein 5 est dans la configuration de la figure 13 où la garniture 161 est plaquée contre le corps 100 sous l'effet d'un effort F₂ qui immobilise en rotation le plateau 110'' autour de l'axe X-X' commun aux arbres 104 et 125. Le corps 102 solidaire en rotation du plateau 110'' est également immobilisé.

Des butées non représentées sont prévues, avec la même fonction que les butées 107a, 107b, 108a et 108b du premier mode de réalisation. Ces butées limitent le pivotement des leviers 106A à 106D et le déplacement angulaire relatif entre les arbres menant et mené.

Lorsque l'arbre 104 est mis en mouvement dans un sens ou dans l'autre, la denture conique 104a engrène avec les dentures coniques des leviers 106A à 106D, de telle sorte que ces leviers tournent respectivement autour des axes Y₁₋Y'₁ ou Y₂-Y'₂, ce qui a pour effet d'exercer, à travers les liaisons LA à L_{D} et sur le plateau 110'', un effort F₅ qui décolle la garniture 161 du boîtier 100. Ceci permet la transmission du couple de rotation entre les arbres 104 et 125 au moyen des parties des leviers coudés 106A à 106D reçues dans les alésages correspondant du corps 102, ces parties entraînant le corps 102 autour de l'axe X-X'. La plaque 122 et l'arbre 125 sont ainsi mis en rotation.

Selon un aspect non représenté de l'invention, plusieurs plateaux du type du plateau 110'' peuvent être prévus dans le frein 5 de ce mode de réalisation, ce qui permet d'obtenir un effet de freinage encore plus puissant.

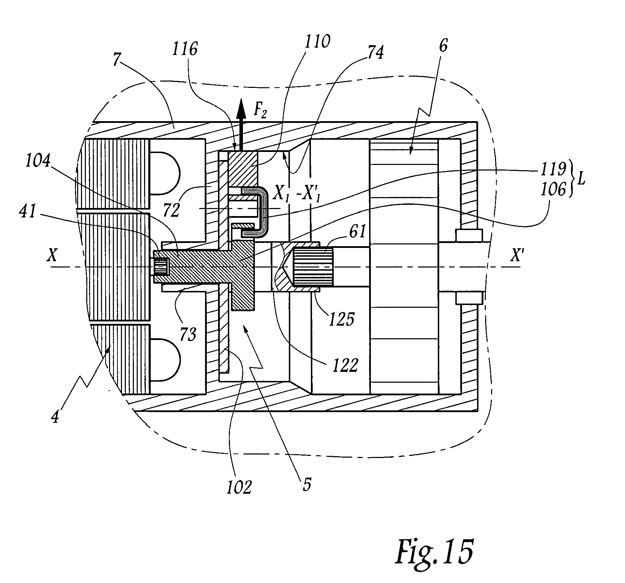

Dans le neuvième mode de réalisation de l'invention représenté à la figure 15, le frein 5 est dépourvu de boîtier et de couvercle correspondant aux éléments 100 et 101 du premier mode de réalisation. Le frein 5 est logé directement à l'intérieur d'un boîtier tubulaire 7 dont une nervure interne 72 forme un palier 73 dans lequel est monté, pivotant autour de l'axe X-X', un pion 104 monobloc avec un levier-traverse 106. Le levier-traverse 106 est relié à un sabot 110 par l'intermédiaire d'une agrafe 119.

Les éléments 106 et 119 forment une liaison articulée L qui permet de contrôler la position du sabot 110, en pivotement autour d'un axe X₁-X'₁ parallèle à l'axe X-X' par rapport à un corps 102 du frein 5 qui est relié à une plaque 122 solidaire d'un arbre creux 125, qui reçoit l'arbre d'entrée 61 d'un réducteur 6.

Comme précédemment, l'arbre de sortie 41 d'un moteur électrique 4 est solidaire en rotation du pion 104.

Ainsi, le contrôle de la position du sabot 110 permet de commander l'effort d'appui F₂ de sa surface radiale externe 116 contre la surface radiale interne 74 du boîtier 7.

Des butées, non représentées et similaires aux butées 107a, 107b, 108a et 108b du premier mode de réalisation, sont prévues, avec la même fonction.

Selon une variante non représentée de l'invention cohérente avec celle décrite en référence avec la figure 15, le frein des figures 13 et 14 pourrait également être dépourvu de boîtier en étant monté dans une structure fixe appropriée.

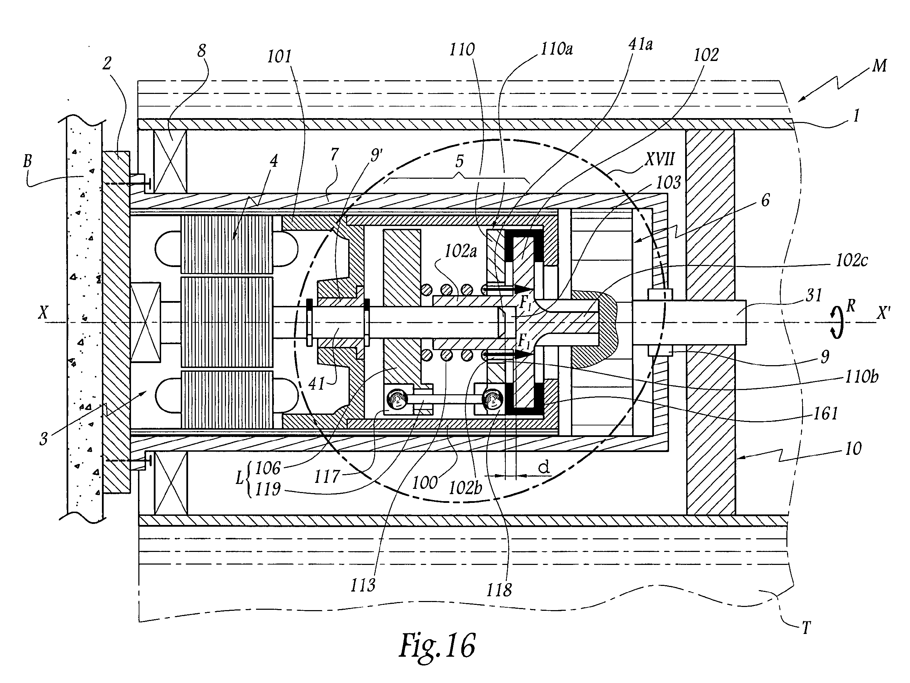

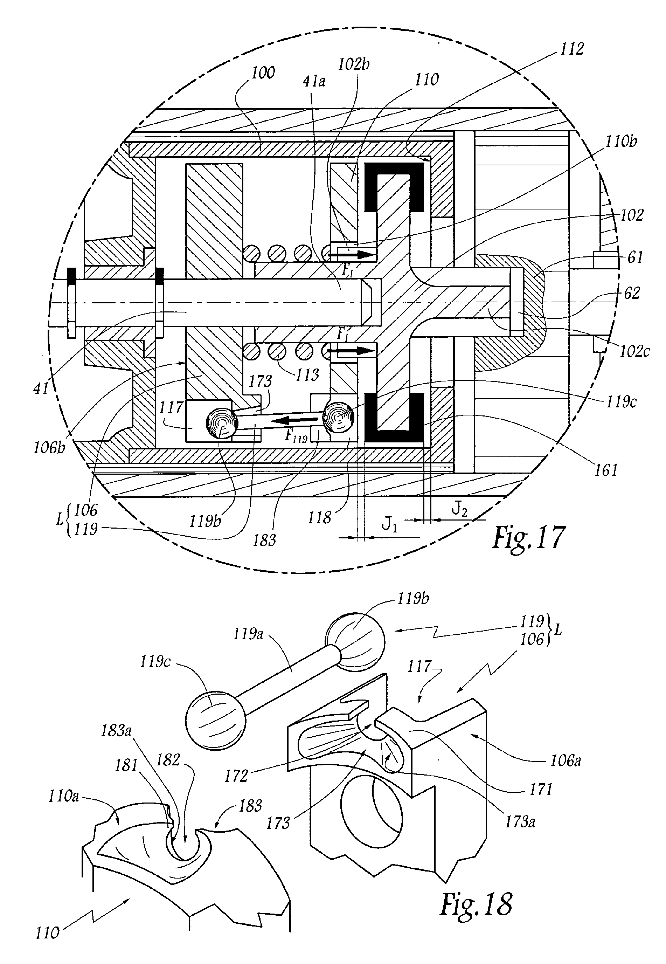

Dans le dixième mode de réalisation représenté aux figures 16 à 18, les éléments analogues à ceux des modes de réalisation précédentes portent les mêmes références.

Le mécanisme M comprend un tube 1 dont l'axe géométrique central est confondu avec l'axe X-X' d'enroulement du tablier T et qui est supporté, par rapport à la structure du bâtiment B, au moyen d'une console 2. Un ensemble d'entraînement 3 est prévu pour mettre en rotation le tube 1 autour de l'axe X-X', comme représenté par la double flèche R. Cet ensemble comprend un moteur électrique 4, un frein 5 et un réducteur 6 logés dans un boîtier tubulaire 7 fixé sur la console 2 par des vis 71 et supporté par un palier 8. Les éléments 2 à 8 précités fonctionnent comme dans le premier mode de réalisation.

On note 41 l'arbre de sortie du moteur 4 et 61 l'arbre d'entrée du réducteur 6 qui est creux et définit un orifice cannelé 62 de réception d'un arbre de sortie du frein 5. L'arbre 61 est représenté partiellement, par arrachement, sur les figures. Pour le frein 5, l'arbre 41 est un arbre menant, alors que l'arbre 61 est un arbre mené. Ces arbres ont leurs axes géométriques principaux confondus avec l'axe X-X'.

Le frein 5 comprend un boîtier 100, un couvercle 101 et un second palier 9 analogue à ceux du premier mode de réalisation.

A l'intérieur du boîtier 100 est disposé un corps 102 destiné à être entraîné en rotation autour de l'axe X-X' et qui est pourvu d'un orifice central borgne 103 dans lequel est reçu, avec possibilité de rotation, l'extrémité 41a de l'arbre 41. L'orifice 103 est ménagé dans un arbre creux 102a monobloc avec la partie principale du corps 102. Le corps 102 forme un arbre cannelé 102c adapté pour pénétrer dans l'orifice 62 afin d'entraîner le réducteur 6 lorsque le corps 102 est mis en mouvement autour de l'axe X-X'. L'arbre 102c forme ainsi l'arbre de sortie du frein 5.

Un bras 106 est monté fixe en rotation autour de l'arbre 41, entre le palier 9 et l'extrémité 41a. Ce bras 106 s'étend radialement par rapport à l'axe X-X', de part et d'autre de celui-ci. Il pourrait également s'étendre sur un côté seulement de cet axe, voire être en forme de plateau ou de disque.

Un plateau de freinage annulaire 110 est monté autour de l'arbre creux 102a avec possibilité de translation parallèlement à l'axe X-X' mais en étant solidaire en rotation avec cet arbre creux et, par voix de conséquence, le corps 102. Pour ce faire, le plateau 110 est pourvu d'une ouverture centrale bordée par une denture 110b adaptée pour coopérer avec une denture périphérique externe 102b de l'arbre 102a.

Le plateau 110 est destiné à être en appui contre une garniture 161 qui enveloppe le bord périphérique externe du corps 102, lequel bord est sensiblement circulaire. Cette garniture est en regard d'une surface annulaire interne 112 du boîtier 100 contre laquelle elle peut être plaquée. Pour ce faire, un ressort 113 est intercalé entre le bras 106 et le plateau 110.

Le ressort 113 exerce sur le plateau 110 un effort F₁ qui tend à plaquer sa surface annulaire opposée au bras 106 contre la surface 161 qui est alors plaquée contre la surface 112. Le matériau constitutif de la garniture 161 est choisi pour que son coefficient de frottement avec la surface 112 soit suffisant pour immobiliser en rotation le corps 102 par rapport au boîtier 100 lorsque la garniture 161 et la surface 112 sont en appui l'une contre l'autre, comme représenté à la figure 1.

Le bras 106 est pourvu d'un logement 117 débouchant à la fois radialement par rapport à l'axe X-X' et sur la face 106b du bras 106 opposé aux éléments 102 et 110. Ce logement 117 est délimité, du côté des éléments 102 et 110, par une cloison 171 dans laquelle est définie une ouverture 172 également débouchante radialement vers l'extérieur par rapport à l'axe X-X'.

Dans l'épaisseur de la cloison 171 est ménagé un évidement 173 qui entoure l'ouverture 172 du côté opposé au logement 117 qui est ménagé au voisinage de l'extrémité 106a du bras 106 la plus éloignée de l'axe X-x'.

Enfin, un logement 118 est ménagé dans le plateau 110, au voisinage de sa surface périphérique 110a, ce logement débouchant sur cette surface. Le logement 118 est limité, du côté opposé au corps 102, par une cloison 181 dans laquelle est ménagée une ouverture 182 débouchant également au niveau de la surface 110a, alors qu'un évidement 183 jouxte cette ouverture du côté de la cloison 181 opposée au logement 118.

Une bielle 119 est utilisée pour relier le bras 106 et le plateau 110. Cette bielle est monobloc et comprend une tige rectiligne 119a ainsi que deux parties ou « têtes » 119b et 119c sensiblement en forme de sphère.

Les têtes 119b et 119c sont destinées à être respectivement engagées dans les logements 117 et 118, par le côté de ceux-ci débouchant radialement sur l'extérieur. Lors de l'introduction des têtes 119b et 119c dans les logements 117 et 118, la tige 119a est engagée dans les ouvertures 172 et 182.

La géométrie des logements 118 et 119 est choisie pour réaliser avec les parties 119b et 119c une articulation de type rotule, alors que les évidements 173 et 183 permettent le positionnement de la tige 119 en fonction de la position de la bielle 119 par rapport aux logements 117 et 118. En d'autres termes, les surfaces 173a et 183a qui définissent les évidements 173 et 183 respectivement dans le levier 106 et le plateau 110 peuvent recevoir en appui la tige 119a et limitent ainsi l'amplitude du pivotement de la bielle 119 par rapport aux éléments 106 et 119.

Les éléments 106 et 119 constituent une liaison articulée L, de type rotule, entre l'arbre 41 et le plateau 110, cette liaison comprenant un premier levier constitué par le bras 106 et un second levier constitué par la bielle 119.

De même, une liaison articulée de type rotule est créée entre la biellette 119 et le plateau 110.

Le fonctionnement du frein 5 est le suivant :

Par défaut, c'est-à-dire lorsque le moteur 4 n'est pas activé, le plateau 110 subit principalement l'action du ressort 113, ce qui a pour effet de générer l'effort F₁ qui induit une immobilisation par friction du plateau 110 contre la garniture 161 du corps 102 et du corps 102 contre la surface 112 à l'intérieur du boîtier 100. Un jeu suffisant est prévu au niveau des interfaces entre les éléments 106 et 119, 110 et 119 pour que l'effort F₁ induise un appui effectif du plateau 110 contre le corps 102 et le boîtier 100.

Dans cette configuration, le frein empêche la mise en rotation de l'arbre mené 61.

Lorsque le moteur 4 est activé, le couple de sortie du moteur 4 met en rotation, le levier-bras 106. Compte tenu de l'articulation à rotule L réalisée par les éléments 106 et 119, ceci induit sur le plateau 110 un effort qui tend à faire tourner le plateau 110 dans le même sens. Comme la biellette 119 est rigide, sa longueur est fixe et le couple transmis au bras 106 se transmet au plateau 110 sous la forme d'un effort F₁₁₉ parallèle à la tige 119a, comme représenté à la figure 2.

Cet effort a, notamment, pour effet de rapprocher le plateau 110 du bras 106. Du fait de l'effort F₁₁₉, le plateau 110 est ainsi éloigné de la garniture 161, à l'encontre de l'effort F₁.

L'appui de la tige 119a sur l'une ou l'autre des surfaces 173a ou 183a permet de contrôler son mouvement par rapport aux éléments 106 et 110. Les surfaces 173a et 183a forment ainsi des butées qui limitent le déplacement angulaire relatif entre les arbres 41 et 61.

La garniture 161 du corps 102 n'étant plus soumise à un effort de pression dû au plateau 110, il se crée un jeu J₁ entre le plateau 110 et la garniture 161 et un jeu J₂ entre cette garniture et la surface 112. Les jeux J₁ et J₂ sont possibles car l'arbre creux 102a est monté sur l'extrémité 41a avec possibilité de translation parallèlement à l'axe X-X'.

Le déblocage du frein décrit ci-dessus se produit quel que soit le sens de rotation du moteur 4.

L'effort de freinage dû au frottement des surfaces 161 et 112 l'une contre l'autre est ainsi supprimé et le corps 102 peut être entraîné en rotation. En d'autres termes, le frein 5 ne s'oppose plus à la transmission du couple entre l'arbre menant 41 et l'arbre mené 61.

Selon une variante non représentée de l'invention, la structure des rotules peut être inversée : une tête globalement sphérique peut être prévu sur le bras 106 ou le plateau 110, alors qu'un ou des logements correspondants sont ménagés sur la bielle 119.

Quel que soit le mode de réalisation considéré, le moteur 4 peut être disposé à l'extérieur du tube d'enroulement, auquel cas le boîtier 7 peut être non tubulaire.

Quel que soit le mode de réalisation considéré, le tube d'enroulement 1 peut être utilisé pour l'enroulement non pas directement du tablier T mais de sangles ou de câbles reliés à un écran de fermeture. Dans ce cas, ce tube peut également être remplacé par un axe plein.

Les caractéristiques techniques des différents modes de réalisation décrits peuvent être combinées entre elles dans le cadre de la présente invention, leurs avantages pouvant se cumuler. En particulier, les différents types de leviers 106 et 119 envisagés peuvent être utilisés dans les différents modes de réalisation, à l'exception de celui de la figure 7.

L'invention a été représentée dans le cadre d'un mécanisme de manoeuvre comprenant un moteur électrique d'entraînement. Elle est cependant applicable à un mécanisme entraîné de façon manuelle, par exemple au moyen d'une manivelle et d'un renvoi d'angle.

## Revendications

1. Frein destiné à être intercalé entre un arbre menant (41) et un arbre mené (61) solidaire en rotation d'une charge (1, T) à freiner, ledit frein comprenant un corps (102) destiné à être solidarisé en rotation avec l'arbre mené, **caractérisé en ce qu'**il comprend :
- au moins un organe de freinage (110 ; 110, 110' ; 110'') monté sur ledit corps et mobile par rapport audit corps entre une première position (figures 1 ; 2 ; 7-9 ; 12 ; 13 ; 15), dite de freinage, dans laquelle ledit organe est en appui (F₂) contre une structure fixe (100 ; 7), et une seconde position (figures 3, 4 ; 14) dans laquelle ledit organe est dégagé de ladite structure fixe ;
- au moins un moyen (113) de rappel (F₁) dudit organe vers ladite première position ;
- un moyen (104, L) de commande du déplacement dudit organe de ladite première position vers ladite seconde position, ledit moyen de commande comprenant au moins une liaison (L ; L, L' ; L_{A}-L_{D}) à deux leviers (106, 119 ; 106, 119, 119' ; 106A-106D, 119A-119D) articulés entre eux (117/119a), dont un premier levier (106 ; 106A-106D) destiné à être solidarisé en rotation avec l'arbre menant (41) est monté pivotant par rapport audit corps (102) et dont le second levier (119 ; 119, 119' ; 119A-119D) est articulé (118/119b) sur ledit organe (110 ; 110, 110' ; 110'') ;
- au moins une butée (107a, 107b 108a, 108b ; 173a, 183a) de limitation du déplacement angulaire relatif entre ledit arbre menant (41) et ledit arbre mené (61), ladite butée étant apte à recevoir en appui l'un (106) desdits leviers (106, 119) lorsque ledit organe est dans ladite seconde position.

2. Frein selon la revendication 1, **caractérisé en ce que** ledit organe (110 ; 110, 110') est adapté pour exercer, dans ladite première position (figures 2, 7-9, 12), un effort de freinage (F₂) essentiellement radial par rapport à un axe géométrique principal (X-X') dudit arbre menant (41).

3. Frein selon l'une des revendications précédentes, **caractérisé en ce que** ledit organe (110 ; 110, 110') est monté pivotant sur ledit corps (102).

4. Frein selon l'une des revendications 1 ou 2, **caractérisé en ce que** ledit organe (110) est monté coulissant par rapport audit corps (102) selon une direction (Y-Y') essentiellement radiale par rapport à un axe géométrique principal (X-X') de l'arbre menant (41).

5. Frein selon la revendication 1, **caractérisé en ce que** ledit organe (110 ; 110'') est adapté pour exercer, dans ladite première position (figures 13 et 16), un effort de freinage (F₂) essentiellement axial par rapport à un axe géométrique principal (X-X')de l'arbre menant.

6. Frein selon l'une des revendications 1 ou 5, **caractérisé en ce que** ledit organe (110 ; 110'') est monté avec possibilité de translation par rapport audit corps (102) selon une direction essentiellement axiale par rapport à un axe géométrique principal (X-X') de l'arbre menant.

7. Frein selon l'une des revendications précédentes, **caractérisé en ce que** ledit second levier (119 ; 119, 119' ; 119A-119D) est constitué par une agrafe globalement en forme de U dont chaque branche (119a, 119b) est engagée dans un logement correspondant (117, 118) prévu respectivement sur ledit premier levier (106 ; 106A-106D) et sur ledit organe (110 ; 110, 110' ; 110''), la coopération d'une branche et du logement correspondant créant une articulation (119a/117, 119b/118).

8. Frein selon l'une des revendications 1 à 6, **caractérisé en ce que** lesdits deux leviers (106, 119) sont monoblocs et articulés entre eux dans une zone (131) de moindre résistance mécanique.

9. Frein selon la revendication 8, **caractérisé en ce que** le second levier (119) est monobloc avec ledit organe (110) auquel il est articulé par une zone (132) de moindre résistance mécanique.

10. Frein selon l'une des revendications précédentes, **caractérisé en ce que** deux organes de freinage (110, 110') sont montés sur ledit corps (102) et disposés selon une symétrie par rapport à un plan (P) contenant l'axe géométrique principal (X-X') de l'arbre menant.

11. Frein selon l'une des revendications 1 à 9, **caractérisé en ce que** deux organes de freinage (110, 110') sont montés sur ledit corps (102) et disposés selon une symétrie par rapport à l'axe géométrique principal (X-X') de l'arbre menant.

12. Frein selon l'une des revendications 10 ou 11, **caractérisé en ce que** ledit moyen (113) de rappel (F₁, F'₁) desdits organes (110, 110') vers ladite première position est commun auxdits organes.

13. Frein selon la revendication 12, **caractérisé en ce qu'**il comprend un moyen (115a) de répartition, entre lesdits organes (110, 110'), de l'effort de rappel exercé (F₁, F'₁) par ledit moyen de rappel (113).

14. Frein selon la revendication 13, **caractérisé en ce que** ledit moyen de rappel est un ressort hélicoïdal (113) en appui par ses deux extrémités (113a, 113b) sur lesdits organes (110, 110') et **en ce que** ledit moyen de répartition est une butée (115) solidaire dudit corps (102) et engagée entre deux spires dudit ressort.

15. Frein selon l'une quelconque des revendications précédentes, **caractérisé en ce que** lorsque ledit organe de freinage (110 ; 110, 110' ; 110'') est dans ladite seconde position, un couple de mise en rotation dudit arbre menant (41) est transmis audit arbre mené (61) par appui dudit levier (106) contre ladite butée (107a, 107b, 108a, 108b ; 173a, 183a).

16. Frein selon l'une quelconque des revendications précédentes, **caractérisé en ce qu'**il comprend au moins deux butées (107a, 107b, 108a, 108b) symétriques par rapport à un plan (P) contenant l'axe (X-X') de rotation dudit arbre mené (61).

17. Frein selon la revendication 16, **caractérisé en ce que** ledit organe (110) est monobloc avec ladite butée (107) par rapport à laquelle il est articulé par une zone (133) de moindre résistance mécanique.

18. Frein selon l'une des revendications précédentes, **caractérisé en ce que** ledit moyen de commande (L ; L, L' ; L_{A}-L_{D}) et/ou les moyens (111) de solidarisation en rotation dudit organe (110 ; 110, 110' ; 110'') et dudit corps (102) comportent un jeu suffisant pour que ledit moyen de rappel (113) puisse effectivement ramener (F₁) ledit organe vers ladite première position (figures 2 ; 7-9 ; 12 ; 13 ; 15 ; 16).

19. Frein selon l'une des revendications 1 à 10 et 12 à 18 **caractérisé en ce que** ladite charge (1, T) est mobile dans deux sens opposés et **en ce que** ledit organe de freinage (110 ; 110 ; 110' ; 110') est apte à exercer, lorsqu'il est dans ladite première position, un effort de freinage identique dans chacun des sens de déplacement de ladite charge.

20. Frein selon l'une des revendications précédentes, **caractérisé en ce que** lesdits deux leviers (106 , 119) sont articulés entre eux par une liaison de type rotule (117, 119b).

21. Frein selon la revendication 20, **caractérisé en ce que** l'un (119) desdits leviers (106, 119) est pourvu d'une tête (119b) partiellement sphérique, alors que l'autre levier (106) est pourvu d'un logement (117) de réception de ladite tête, avec possibilité de mouvement angulaire relatif.

22. Frein selon la revendication 21, **caractérisé en ce que** ledit logement (117) est configuré pour recevoir ladite tête (119b) avec possibilité de mouvement selon une direction globalement parallèle à la direction (X-X') de déplacement dudit organe (110) entre lesdites positions.

23. Frein selon l'une des revendications 20 à 22, **caractérisé en ce que** ledit second levier (119) est articulé sur ledit organe (110) par une liaison de type rotule (118, 119c).

24. Frein selon l'une des revendications 20 à 23, **caractérisé en ce que** l'un (119) des éléments que sont le second levier (119) et l'organe de freinage (110) est pourvu d'une tête (119c) partiellement sphérique, alors que l'autre élément (110) est pourvu d'un logement (118) de réception de ladite tête avec possibilité de mouvement angulaire relatif.

25. Frein selon l'une des revendications 21, 22 ou 24, **caractérisé en ce que** lesdits logements (117, 118) sont délimités, entre autres, par une cloison (171, 181) percée d'une ouverture (172, 182) de passage d'une partie (119a) de l'élément (119) pourvu de ladite ou desdites têtes (119b, 119c), ladite ouverture étant bordée, sur son côté opposé au(x)dit(s) logement(s), d'une zone en creux (173, 183) de réception dudit élément en fonction de son déplacement angulaire par rapport au(x)dit(s) logement(s).

26. Frein selon la revendication 25, **caractérisé en ce que** l'une au moins desdites zones en creux (173, 183) est délimités par une surface (173a, 183a) formant ladite butée de limitation du déplacement angulaire relatif entre ledit arbre menant (41) et ledit arbre mené (61).

27. Frein selon l'une des revendications 21 à 26, **caractérisé en ce que** l'élément pourvu de ladite ou desdites têtes (119b, 119c) est ledit second levier (119).

28. Mécanisme (M) de manoeuvre d'un écran (T) de fermeture, de protection solaire, de projection ou analogue, ledit mécanisme comprenant un organe d'entraînement (4) et un organe (1) d'enroulement dudit écran, **caractérisé en ce qu'**il comprend un frein (5) selon l'une des revendications précédentes intercalé entre ledit organe d'entraînement et ledit organe d'enroulement.

29. Installation de fermeture, de protection solaire ou de projection d'images, **caractérisé en ce qu'**elle comprend un mécanisme de manoeuvre (M) selon la revendication 28.
